(19) Europäisches Patentamt
European Patent Office
Office européen des brevets

(11) EP 4 213 346 A1

(12) **EUROPEAN PATENT APPLICATION**
published in accordance with Art. 153(4) EPC

(43) Date of publication:
**19.07.2023 Bulletin 2023/29**

(51) International Patent Classification (IPC):
**H02K 1/27** (2022.01)

(21) Application number: **20953217.5**

(52) Cooperative Patent Classification (CPC):
**H02K 1/27**

(22) Date of filing: **09.09.2020**

(86) International application number:
**PCT/JP2020/034033**

(87) International publication number:
**WO 2022/054149 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **WATANABE, Takanori**
**Tokyo 100-8310 (JP)**
• **TSUCHIDA, Kazuchika**
**Tokyo 100-8310 (JP)**
• **SHIMOKAWA, Takaya**
**Tokyo 100-8310 (JP)**
• **TAKAHASHI, Ryogo**
**Tokyo 100-8310 (JP)**
• **TAMURA, Naoki**
**Tokyo 100-8310 (JP)**

(74) Representative: **Pfenning, Meinig & Partner mbB
Patent- und Rechtsanwälte
Theresienhöhe 11a
80339 München (DE)**

(54) **ROTOR, ELECTRIC MOTOR, BLOWER, AND AIR CONDITIONING DEVICE**

(57) A rotor (1) includes a rotary shaft (10), a first permanent magnet (20) supported by the rotary shaft (10), and a second permanent magnet (30) supported by an outer periphery of the first permanent magnet (20) and having a magnetic pole stronger than a magnetic pole of the first permanent magnet (20). The second permanent magnet (30) includes a plurality of magnet parts (31) arranged at intervals in a circumferential direction of the first permanent magnet (20). A first width (W1) as a width in the circumferential direction of each of the plurality of magnet parts (31) at a central part (20c) of the first permanent magnet (20) in an axial direction of the rotary shaft (10) is wider than a second width (W2) as a width in the circumferential direction of each of the magnet parts (31) at an end part (20d) of the first permanent magnet (20) in the axial direction.

FIG. 2

EP 4 213 346 A1

## Description

## TECHNICAL FIELD

The present disclosure relates to a rotor, a motor, a blower and an air conditioner.

## BACKGROUND ART

As a rotor used for a motor, there has been proposed a rotor including two types of permanent magnets (see Patent References 1 and 2, for example).

The rotor described in Patent References 1 and 2 includes a first permanent magnet supported by a rotary shaft and a second permanent magnet supported by an outer periphery of the first permanent magnet and having a magnetic pole stronger than a magnetic pole of the first permanent magnet. In Patent References 1 and 2, the second permanent magnet forms an outer circumference of the rotor. With this configuration, the magnetic flux amount of magnetic flux flowing from the rotor to the stator of the motor can be increased.

## PRIOR ART REFERENCE

## PATENT REFERENCE

Patent Reference 1: Japanese Patent Application Publication No. 2005-151757
Patent Reference 2: Japanese Patent Application Publication No. 2011-087393

## SUMMARY OF THE INVENTION

## PROBLEM TO BE SOLVED BY THE INVENTION

However, a permanent magnet having a strong magnetic pole is generally expensive. Thus, the manufacturing cost of the rotor increases in a case where the second permanent magnet having a magnetic pole stronger than a magnetic pole of the first permanent magnet forms the whole outer circumference of the rotor.

An object of the present disclosure is to secure a sufficient magnetic flux amount of magnetic flux generated in the rotor while reducing the manufacturing cost of the rotor.

## MEANS FOR SOLVING THE PROBLEM

A rotor according to an aspect of the present disclosure includes a rotary shaft, a first permanent magnet supported by the rotary shaft, and a second permanent magnet supported by an outer periphery of the first permanent magnet and having a magnetic pole stronger than a magnetic pole of the first permanent magnet. The second permanent magnet includes a plurality of magnet parts arranged at intervals in a circumferential direction of the first permanent magnet. A first width as a width in the circumferential direction of each of the plurality of magnet parts at a central part of the first permanent magnet in an axial direction of the rotary shaft is wider than a second width as a width in the circumferential direction of each of the magnet parts at an end part of the first permanent magnet in the axial direction.

## EFFECT OF THE INVENTION

According to the present disclosure, a sufficient magnetic flux amount of magnetic flux generated in the rotor can be secured while reducing the manufacturing cost of the rotor.

## BRIEF DESCRIPTION OF THE DRAWINGS

FIG. 1 is a plan view showing the configuration of a motor according to a first embodiment.
FIG. 2 is a side view showing the configuration of a rotor shown in FIG. 1 and part of the configuration of a stator.
FIG. 3 is a plan view showing the configuration of the rotor shown in FIG. 2.
FIG. 4 is a plan view showing the configuration of a ferrite bond magnet shown in FIG. 3.
FIG. 5 is a sectional view showing the configuration of the rotor according to the first embodiment.
FIG. 6 is a sectional view of the ferrite bond magnet shown in FIG. 5 taken along the line A6 - A6.
FIG. 7 is a flowchart showing a manufacturing process of the rotor according to the first embodiment.
FIG. 8 is a flowchart showing a manufacturing process of a rotor body according to the first embodiment.
FIG. 9 is a plan view showing the configuration of a rotor according to a first comparative example.
FIG. 10(A) is a side view showing the configuration of a rotor according to a second comparative example.
FIG. 10(B) is a sectional view showing the configuration of the rotor according to the second comparative example.
FIG. 11 is a graph showing distribution of the surface magnetic flux density of the rotor according to the first comparative example and distribution of the surface magnetic flux density of the rotor according to the second comparative example.
FIG. 12 is a graph showing distribution of the surface magnetic flux density of the rotor according to the first embodiment and the distribution of the surface magnetic flux density of the rotor according to the first comparative example.
FIG. 13 is a side view showing the configuration of a rotor according to a second embodiment.
FIG. 14 is a plan view showing the configuration of a rotor according to a third embodiment.

FIG. 15 is a sectional view showing the configuration of a rotor according to a fourth embodiment.

FIG. 16 is a sectional view of the rotor shown in FIG. 15 taken along the line A16 - A16.

FIG. 17 is a sectional view showing the configuration of a rotor according to a fifth embodiment.

FIG. 18 is a partial sectional view showing the configuration of the rotor shown in FIG. 17.

FIG. 19 is a partial sectional view showing the configuration of a rotor according to a sixth embodiment.

FIG. 20 is a sectional view showing the configuration of a rotor according to a seventh embodiment.

FIG. 21 is a plan view showing the configuration of a rotor according to an eighth embodiment.

FIG. 22 is a side view showing the configuration of the rotor according to the eighth embodiment.

FIG. 23 is a sectional view of the rotor shown in FIG. 21 taken along the line A23 - A23.

FIG. 24 is a plan view showing the configuration of a rotor according to a first modification of the eighth embodiment.

FIG. 25 is a sectional view of the rotor shown in FIG. 24 taken along the line A25 - A25.

FIG. 26 is a diagram schematically showing the configuration of an air conditioner according to a ninth embodiment.

## MODE FOR CARRYING OUT THE INVENTION

A rotor, a motor, a blower and an air conditioner according to each embodiment of the present disclosure will be described below with reference to the drawings. The following embodiments are just examples and it is possible to appropriately combine the embodiments and appropriately modify each embodiment.

An xyz orthogonal coordinate system is shown as needed in each drawing in order to facilitate the understanding of descriptions regarding the configuration of the rotor or the like shown in the drawing. A z-axis is a coordinate axis parallel to an axis C1 of the rotor. An x-axis is a coordinate axis orthogonal to the z-axis. A y-axis is a coordinate axis orthogonal to both of the x-axis and the z-axis.

### (First Embodiment)

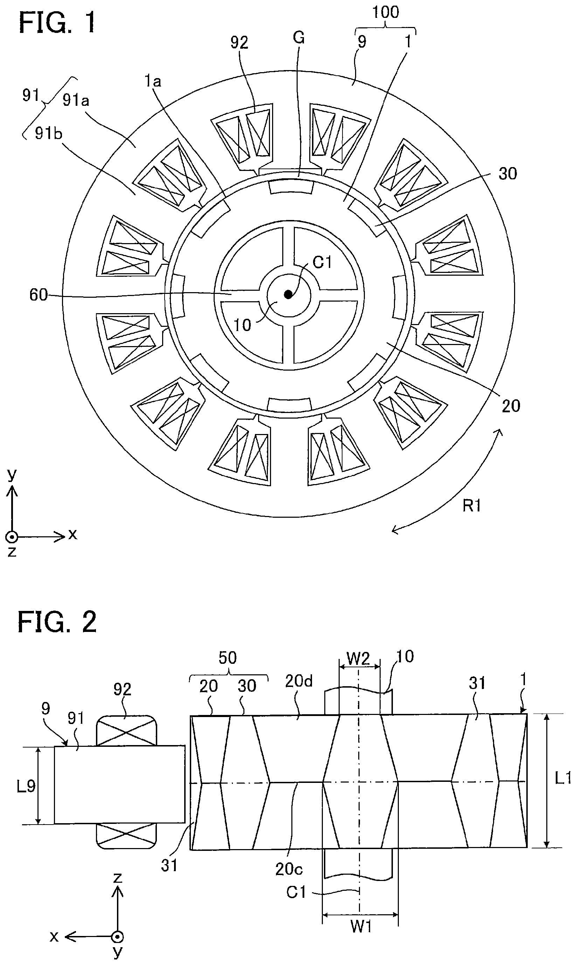

FIG. 1 is a plan view showing the configuration of a motor 100 according to a first embodiment. The motor 100 is a permanent magnet synchronous motor, for example. The motor 100 includes a rotor 1 and a stator 9. The rotor 1 is disposed on an inner side of the stator 9. Namely, the motor 100 is a motor of the inner rotor type. An air gap G is formed between the rotor 1 and the stator 9. The air gap G is a gap of 0.5 mm, for example.

The rotor 1 includes a shaft 10 as a rotary shaft. The shaft 10 extends in the z-axis direction. In the following description, the z-axis direction is also referred to as an "axial direction". The direction along a circumference of a circle centering at the axis C1 of the shaft 10 (for example, as shown by the arrow R1 in FIG. 1) is referred to as a "circumferential direction". The direction of a straight line orthogonal to the z-axis direction and passing through the axis C1 is referred to as a "radial direction". The rest of the configuration of the rotor 1 will be described later.

### (Stator)

The stator 9 includes a stator core 91 and a coil 92 wound on the stator core 91. The stator core 91 includes a yoke 91a in a ring shape about the axis C1 and a plurality of teeth 91b extending inward in the radial direction from the yoke 91a. The plurality of teeth 91b are arranged at equal angular intervals in the circumferential direction R1. A tip end part of each tooth 91b on the inner side in the radial direction faces an outer circumference 1a of the rotor 1 via the air gap G. While the number of teeth 91b is 12 in FIG. 1, the number of teeth 91b is not limited to 12 but may be set at any number.

### (Rotor)

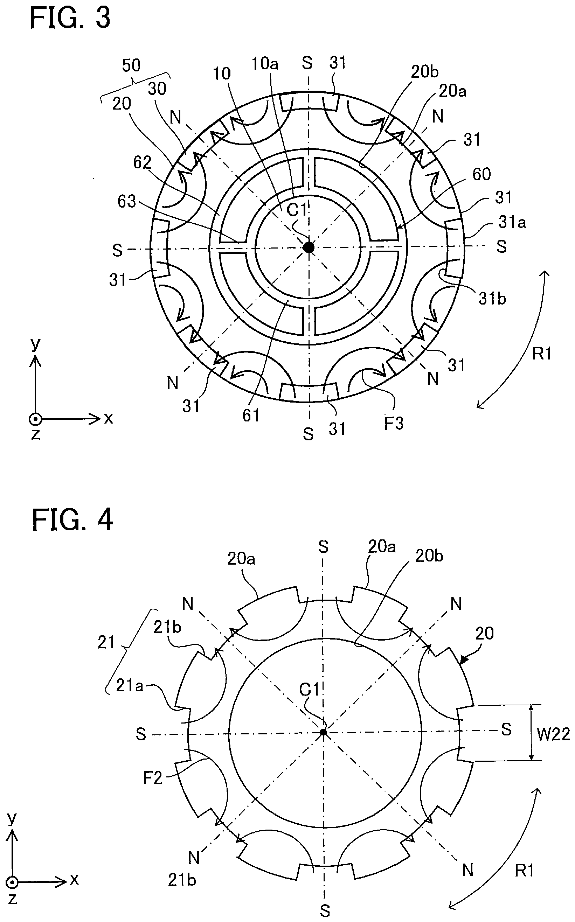

FIG. 2 is a side view showing the configuration of the rotor 1 and part of the configuration of the stator 9 according to the first embodiment. FIG. 3 is a plan view showing the configuration of the rotor 1 shown in FIG. 2. As shown in FIGS. 2 and 3, the rotor 1 includes the shaft 10, a ferrite bond magnet 20 as a first permanent magnet, and a rare-earth bond magnet 30 as a second permanent magnet.

As shown in FIG. 2, in the first embodiment, the length L1 of the rotor 1 in the axial direction is longer than the length L9 of the stator core 91 of the stator 9 in the axial direction. With this configuration, the magnetic flux amount of interlinkage magnetic flux flowing from the permanent magnets (i.e., the ferrite bond magnet 20 and the rare-earth bond magnet 30) of the rotor 1 to the coil 92 of the stator 9 can be increased.

The ferrite bond magnet 20 is supported by the shaft 10. The ferrite bond magnet 20 contains a ferrite magnet and a resin. The resin contained in the ferrite bond magnet 20 is nylon resin, PPS (Poly Phenylene Sulfide) resin, epoxy resin or the like, for example.

The rare-earth bond magnet 30 is supported by an outer periphery 20a of the ferrite bond magnet 20. The rare-earth bond magnet 30 contains a rare-earth magnet and a resin. The rare-earth magnet is a neodymium magnet containing neodymium (Nd), iron (Fe) and boron (B), a samarium-iron-nitrogen magnet containing samarium (Sm), Fe and nitrogen (N), or the like, for example. The resin contained in the rare-earth bond magnet 30 is nylon resin, PPS resin, epoxy resin or the like, for example, similarly to the resin contained in the ferrite bond magnet 20.

The ferrite bond magnet 20 and the rare-earth bond magnet 30 differ from each other in strength (i.e., quantity of magnetism) of a magnetic pole. Specifically, the rare-earth bond magnet 30 has a magnetic pole stronger than a magnetic pole of the ferrite bond magnet 20. In other words, magnetic force of the rare-earth bond magnet 30 is greater than magnetic force of the ferrite bond magnet 20. Further, the ferrite bond magnet 20 and the rare-earth bond magnet 30 differ from each other in the linear expansion coefficient.

FIG. 4 is a plan view showing the configuration of the ferrite bond magnet 20 shown in FIG. 3. As shown in FIG. 4, a two-dimensional shape of the ferrite bond magnet 20 parallel to an xy plane is a ring shape about the axis C1. The outer periphery 20a of the ferrite bond magnet 20 forms part of the outer circumference 1a (see FIG. 1) of the rotor 1. The ferrite bond magnet 20 has a plurality of groove parts 21 arranged at intervals in the circumferential direction R1 about the axis C1. The plurality of groove parts 21 are disposed at positions at equal angles in the circumferential direction R1 about the axis C1. Each groove part 21 is recessed from the outer periphery 20a toward an inner circumference 20b of the ferrite bond magnet 20. The groove part 21 is an oblong groove that is elongated in the axial direction.

The ferrite bond magnet 20 is oriented to have polar anisotropy. Accordingly, the plurality of groove parts 21 include south pole groove parts 21a and north pole groove parts 21b. Namely, a plurality of groove parts 21a and 21b adjacent to each other in the circumferential direction R1 have magnetic poles different from each other in the polarity. The arc-like arrow F2 shown in FIG. 4 indicates the direction of magnetic flux in the ferrite bond magnet 20. Magnetic flux flowing in from the outer side of the south pole groove part 21a in the radial direction advances to the north pole groove part 21b adjacent thereto in the circumferential direction R1. Thus, the rotor 1 (see FIG. 2) is not required to have a rotor core that forms a magnetic path on the inner side of the ferrite bond magnet 20 in the radial direction. Accordingly, the number of components in the rotor 1 can be reduced and the weight of the rotor 1 can be reduced.

As shown in FIG. 3, in the first embodiment, the ferrite bond magnet 20 is supported by the shaft 10 via a resin part 60. The resin part 60 is formed of unsaturated polyester resin, for example. The resin part 60 includes an inner cylinder part 61, an outer cylinder part 62 and a plurality of (four in the first embodiment) ribs 63. The inner cylinder part 61 has a cylindrical shape and is fixed to an outer circumference 10a of the shaft 10. The outer cylinder part 62 has a cylindrical shape and is fixed to the inner circumference 20b of the ferrite bond magnet 20. The plurality of ribs 63 connect the inner cylinder part 61 and the outer cylinder part 62 to each other. The plurality of ribs 63 radially extend outward in the radial direction from the inner cylinder part 61. The plurality of ribs 63 are disposed at positions at equal angles in the circumferential direction R1 about the axis C1. Incidentally, the ferrite bond magnet 20 may also be fixed to the shaft 10 directly via no resin part 60.

The rare-earth bond magnet 30 includes a plurality of rare-earth magnet parts 31 as a plurality of magnet parts arranged at intervals in the circumferential direction R1. An outer periphery 31a of each of the plurality of rare-earth magnet parts 31 forms a part of the outer circumference 1a (see FIG. 1) of the rotor 1. The outer periphery 31a and an inner periphery 31b of the rare-earth magnet part 31 are situated on concentric circles. Namely, the thickness of the rare-earth magnet part 31 in the radial direction is constant in the circumferential direction R1.

Each of the plurality of rare-earth magnet parts 31 is oriented to have the polar anisotropy. A plurality of rare-earth magnet parts 31 adjacent to each other in the circumferential direction R1 have magnetic poles different from each other in the polarity. The arc-like arrows F3 shown in FIG. 3 indicate the directions of magnetic flux in the rare-earth magnet parts 31. Magnetic flux flowing in from the outer side of the south pole rare-earth magnet part 31 in the radial direction advances to the north pole rare-earth magnet part 31 adjacent thereto in the circumferential direction R1. In the first embodiment, the rotor 1 has 8 magnetic poles since the rare-earth bond magnet 30 includes 8 rare-earth magnet parts 31. Incidentally, the number of magnetic poles of the rotor 1 is not limited to 8. It is sufficient that the number of magnetic poles of the rotor 1 is 2n or more. The number n is a natural number greater than or equal to 1.

The rare-earth magnet parts 31 are disposed in the groove parts 21 (see FIG. 4) of the ferrite bond magnet 20. The ferrite bond magnet 20 and the rare-earth magnet parts 31 are joined to each other. In the first embodiment, the rare-earth magnet parts 31 are jointed to the groove parts 21 of the ferrite bond magnet 20 by integral molding (referred to also as "two-color molding") of the ferrite bond magnet 20 and the rare-earth bond magnet 30. With this configuration, a rotor body 50 including the ferrite bond magnet 20 and the rare-earth bond magnet 30 is formed.

In the first embodiment, the integral molding of the ferrite bond magnet 20 and the rare-earth bond magnet 30 means that the rare-earth bond magnet 30 is molded in a state in which the ferrite bond magnet 20 manufactured previously is placed in a mold. Thus, as compared to a configuration in which the ferrite bond magnet 20 is molded in a state in which the rare-earth bond magnet 30 (i.e., the plurality of rare-earth magnet parts 31) is placed in the mold, work of placing a plurality of (8 in the first embodiment) rare-earth magnet parts 31 in the mold can be eliminated, and therefore the productivity of the rotor body 50 can be increased.

As shown in FIG. 2, a central part 20c of the ferrite bond magnet 20 in the axial direction faces the stator core 91 in the radial direction. Further, a width in the circumferential direction of each of the plurality of rare-earth magnet parts 31 gradually increases from each end part 20d toward the central part 20c of the ferrite bond magnet 20 in the axial direction. A first width W1 represents a width in the circumferential direction of each rare-earth magnet part 31 in the central part 20c of the ferrite bond magnet 20 in the axial direction. A second width W2 represents a width in the circumferential direction of each rare-earth magnet part 31 in the end part 20d of the ferrite bond magnet 20 in the axial direction. The first width W1 is wider than the second width W2. Namely, the first width W1 and the second width W2 satisfy the following expression (1):

$$W1 > W2 \qquad (1)$$

With this configuration, a magnetic pole of the rare-earth magnet part 31 at the central part 20c of the ferrite bond magnet 20 facing the stator core 91 in the radial direction is made stronger than a magnetic pole of the rare-earth magnet part 31 at the end part 20d of the ferrite bond magnet 20 in the axial direction. Therefore, a sufficient magnetic flux amount of the magnetic flux generated in the rotor 1 can be secured.

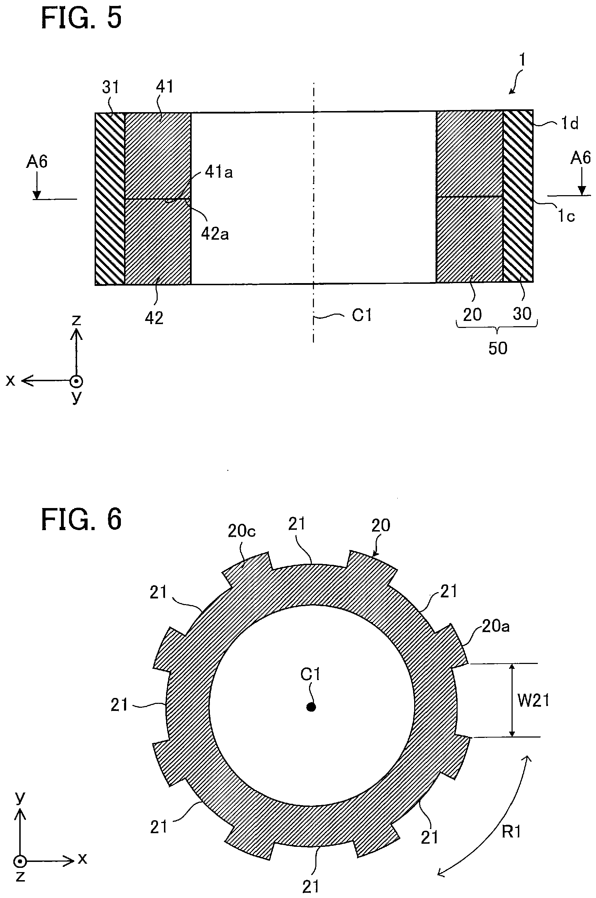

Here, when the length L1 of the rotor 1 in the axial direction is longer than the length L9 of the stator core 91 in the axial direction, there is a case where leakage flux is included in magnetic flux flowing from an end part of the rotor 1 in the axial direction (i.e., end part 1d shown in FIG. 5 which will be described later) to the stator 9. According to the first embodiment, since the first width W1 is wider than the second width W2 as described above, the magnetic pole of the rare-earth magnet part 31 at the central part 20c of the ferrite bond magnet 20 in the axial direction is made stronger than the magnetic pole of the rare-earth magnet part 31 at the end part 20d of the ferrite bond magnet 20 in the axial direction. Therefore, a sufficient magnetic flux amount of magnetic flux flowing from the rotor 1 to the stator 9 can be secured.

FIG. 5 is a sectional view showing the configuration of the rotor 1 according to the first embodiment. As shown in FIG. 5, the ferrite bond magnet 20 includes a first ferrite magnet part 41 as a first split magnet part and a second ferrite magnet part 42 as a second split magnet part. The first ferrite magnet part 41 and the second ferrite magnet part 42 are aligned in the axial direction. Namely, in the first embodiment, the ferrite bond magnet 20 is split into two magnet parts at the central part 20c in the axial direction. In the axial direction, the first ferrite magnet part 41 and the second ferrite magnet part 42 are in contact with each other. Incidentally, the shaft 10 (see FIG. 2) is not shown in FIG. 5.

FIG. 6 is a sectional view showing the ferrite bond magnet 20 shown in FIG. 5 taken along the line A6 - A6. Here, the line A6 - A6 shown in FIG. 5 is a straight line passing through the central part 20c (see FIG. 2) of the ferrite bond magnet 20 in the axial direction. Namely, FIG. 6 is a sectional view showing the configuration of the central part 20c of the ferrite bond magnet 20 in the axial direction.

As shown in FIGS. 4 and 6, a width W21 represents a width in the circumferential direction R1 of the groove part 21 in the central part 20c of the ferrite bond magnet 20 in the axial direction. A width W22 represents a width in the circumferential direction of the groove part 21 in the end part 20d of the ferrite bond magnet 20 in the axial direction. The width W21 is wider than the width W22. Namely, the width W21 and the width W22 satisfy the following expression (2):

$$W21 > W22 \qquad (2)$$

Further, the width W21 equals the first width W1 shown in FIG. 2, and the width W22 equals the second width W2 shown in FIG. 2. Namely, the shape of the groove part 21 of the ferrite bond magnet 20 corresponds to the shape of the rare-earth magnet part 31.

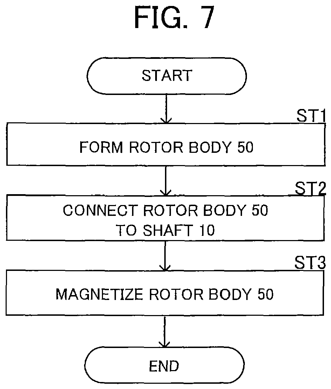

Next, a manufacturing method of the rotor 1 will be described with reference to FIG. 7. FIG. 7 is a flowchart showing a manufacturing process of the rotor 1. In the manufacturing process of the rotor 1, a magnetizer is used.

In step ST1, the rotor body 50 is formed. Incidentally, details of the step ST1 will be described later.

In step ST2, the rotor body 50 is connected to the shaft 10. In the first embodiment, the rotor body 50 is connected to the shaft 10 by integrating the rotor body 50 and the shaft 10 together via the resin part 60.

In step ST3, the rotor body 50 is magnetized by using the magnetizer, for example. Specifically, the ferrite bond magnet 20 and the rare-earth bond magnet 30 are magnetized so that the ferrite bond magnet 20 and the rare-earth bond magnet 30 have the polar anisotropy.

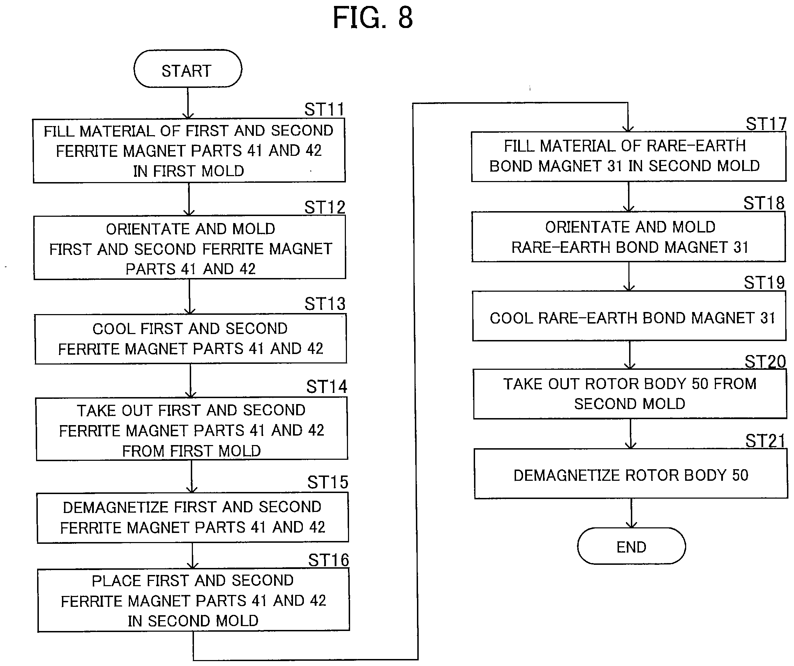

Next, the details of the process of forming the rotor body 50 (i.e., the step ST1 shown in FIG. 7) will be described with reference to FIG. 8. FIG. 8 is a flowchart showing the process of forming the rotor body 50. In the process of forming the rotor body 50, a first mold for molding the first ferrite magnet part 41 and the second ferrite magnet part 42, a second mold for molding the rare-earth bond magnet 30, and a magnet for the orientation are used.

In step ST11, the inside of the first mold for molding the first ferrite magnet part 41 and the second ferrite magnet part 42 is filled with the material of the first ferrite magnet part 41 and the second ferrite magnet part 42. The first ferrite magnet part 41 and the second ferrite magnet part 42 are molded by injection molding, for example. Incidentally, the method of molding the first ferrite magnet part 41 and the second ferrite magnet part 42 is not limited to injection molding. The first ferrite magnet part 41 and the second ferrite magnet part 42 may be molded by a different molding method such as press molding.

In step ST12, the first ferrite magnet part 41 and the second ferrite magnet part 42 having predetermined shapes are molded while orienting the material of the first ferrite magnet part 41 and the second ferrite magnet part 42. In the step ST12, the first ferrite magnet part 41 and the second ferrite magnet part 42 are molded while orienting the material of the first ferrite magnet part 41 and the second ferrite magnet part 42 in a state in which a magnetic field having the polar anisotropy is generated inside the first mold by using the magnet for the orientation, for example. With this step, the ferrite bond magnet 20 having the polar anisotropy is molded. Further, in the step ST12, the molding is carried out so that an end face 41a of the first ferrite magnet part 41 and an end face 42a of the second ferrite magnet part 42 face the +z-axis direction.

In step ST13, the first ferrite magnet part 41 and the second ferrite magnet part 42 which are molded are cooled down.

In step ST14, the first ferrite magnet part 41 and the second ferrite magnet part 42 are taken out of the first mold.

In step ST15, the first ferrite magnet part 41 and the second ferrite magnet part 42 taken out in the step ST14 are demagnetized.

In step ST16, the first ferrite magnet part 41 and the second ferrite magnet part 42 are placed inside the second mold for the injection molding of the rare-earth bond magnet 30. In the step ST16, the first ferrite magnet part 41 and the second ferrite magnet part 42 are placed inside the second mold so that the end face 41a of the first ferrite magnet part 41 in the axial direction and the end face 42a of the second ferrite magnet part 42 in the axial direction contact each other. Namely, in the step ST16, the end face 41a of the first ferrite magnet part 41 is stuck to the end face 42a of the second ferrite magnet part 42 by inverting the first ferrite magnet part 41 molded in the step ST12 in the axial direction. Further, in the first embodiment, work of positioning the first ferrite magnet part 41 and the second ferrite magnet part 42 can be facilitated since the groove parts 21 are formed in the part of the ferrite bond magnet 20 where the end face 41a and the end face 42a contact each other (i.e., the central part 20c in the axial direction).

In step ST17, the groove parts 21 of the ferrite bond magnet 20 placed in the second mold are filled with the material of the rare-earth bond magnet 30. The rare-earth bond magnet 30 is molded by injection molding, for example. Incidentally, the method of molding the rare-earth bond magnet 30 is not limited to injection molding. The rare-earth bond magnet 30 may be molded by a different molding method such as press molding.

In step ST18, the rare-earth bond magnet 30 having a predetermined shape is molded while orienting the material of the rare-earth bond magnet 30. In the step ST18, the rare-earth bond magnet 30 (i.e., the plurality of rare-earth magnet parts 31) is molded while orienting the material of the rare-earth bond magnet 30 in a state in which a magnetic field having the polar anisotropy is generated inside the second mold by using the magnet for the orientation, for example. With this step, the rotor body 50 in which the ferrite bond magnet 20 and the rare-earth bond magnet 30 are molded integrally is formed.

In step ST19, the rotor body 50 formed in the step ST18 is cooled down.

In step ST20, the rotor body 50 cooled down is taken out of the second mold.

In step ST21, the rotor body 50 taken out in the step ST20 is demagnetized.

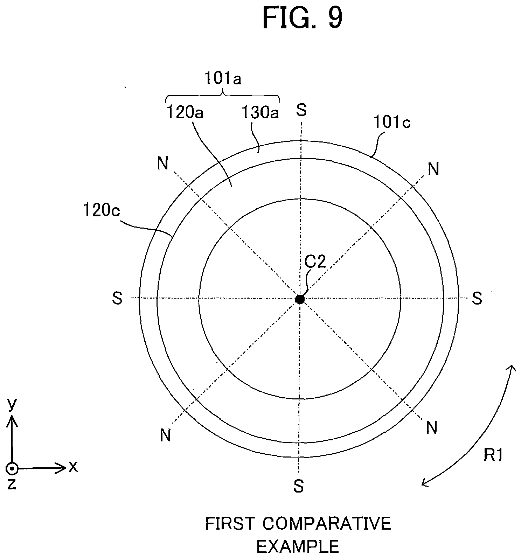

Next, a manufacturing cost of the rotor 1 according to the first embodiment will be described while making a comparison with a rotor 101a according to a first comparative example. FIG. 9 is a plan view showing the configuration of the rotor 101a according to the first comparative example. Incidentally, the shaft 10 is not shown in FIG. 9.

As shown in FIG. 9, in the rotor 101a according to the first comparative example, a rare-earth bond magnet 130a in a ring shape is disposed on an outer circumference 120c of a ferrite bond magnet 120a in a ring shape. Namely, in the rotor 101a according to the first comparative example, the whole of an outer circumference 101c of the rotor 101a is formed by the rare-earth bond magnet 130a.

In contrast, in the first embodiment, as shown in FIG. 2 described above, the outer circumference 1a of the rotor 1 is formed by the outer periphery 20a of the ferrite bond magnet 20 and the outer peripheries 31a of the plurality of rare-earth magnet parts 31 of the rare-earth bond magnet 30. With this configuration, in the rotor 1 according to the first embodiment, the amount of use of the rare-earth bond magnet 30 can be reduced as compared to the rotor 101a according to the first comparative example. Specifically, in the rotor 1 according to the first embodiment, the amount of use of the rare-earth bond magnet 30 can be reduced by approximately 20 % as compared to the rotor 101a according to the first comparative example. The rare-earth bond magnet 30 is expensive as compared to the ferrite bond magnet 20. For example, the material unit price of the rare-earth bond magnet 30 is 10 times or more of the material unit price of the ferrite bond magnet 20. The amount of use of the rare-earth bond magnet 30 can be reduced since the outer circumference 1a of the rotor 1 is formed by the outer periphery 20a of the ferrite bond magnet 20 and the outer peripheries 31a of the plurality of rare-earth magnet parts 31. Thus, the manufacturing cost of the rotor 1 according to the first embodiment can be reduced.

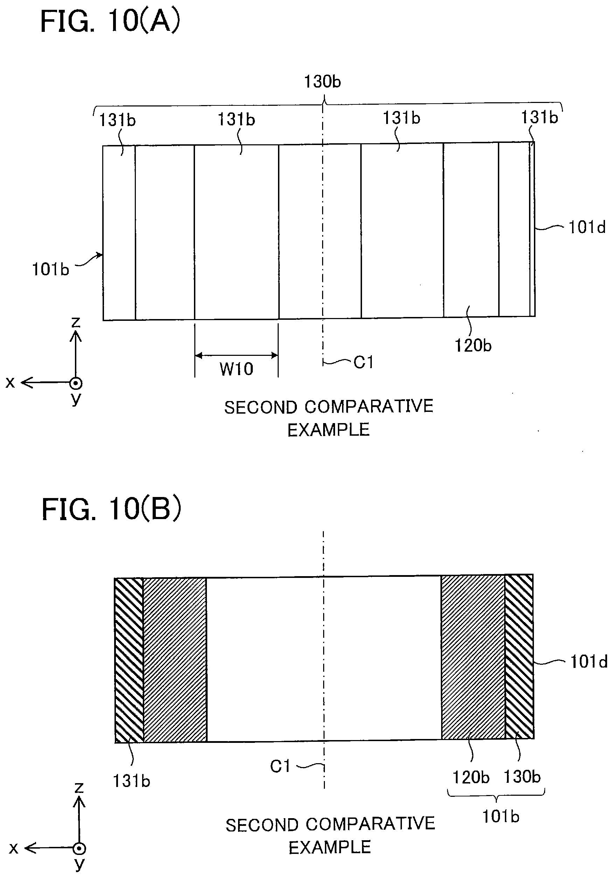

Next, the surface magnetic flux density of the rotor 1 according to the first embodiment will be described while making a comparison with the rotor 101a according to the first comparative example and a rotor 101b according to a second comparative example. FIG. 10 (A) is a side view showing the configuration of the rotor 101b according to the second comparative example. FIG. 10(B) is a sectional view showing the configuration of the rotor 101b according to the second comparative example. Incidentally, the shaft 10 is not shown in FIGS. 10(A) and 10(B).

As shown in FIGS. 10(A) and 10(B), the rotor 101b includes a ferrite bond magnet 120b and a rare-earth bond magnet 130b. The rare-earth bond magnet 130b includes a plurality of rare-earth magnet parts 131b arranged at intervals in the circumferential direction R1. Thus, the amount of use of the rare-earth bond magnet 130b in the rotor 101b according to the second comparative example is the same as the amount of use of the rare-earth bond magnet 30 in the rotor 1 according to the first embodiment and differs from the amount of use of the rare-earth bond magnet 130a in the rotor 1 according to the first comparative example. Further, in the rotor 101b according to the second comparative example, the width W10 of the rare-earth magnet part 131b in the circumferential direction R1 is constant in the axial direction. Thus, the rotor 101b according to the second comparative example differs from the rotor 1 according to the first embodiment and the rotor 101a according to the first comparative example in the shape of the rare-earth magnet part 131b. Furthermore, in the rotor 101b according to the second comparative example, the ferrite bond magnet 120b is not split in the axial direction. Thus, the rotor 101b according to the second comparative example differs from the rotor 1 according to the first embodiment in the shape of the ferrite bond magnet 120b.

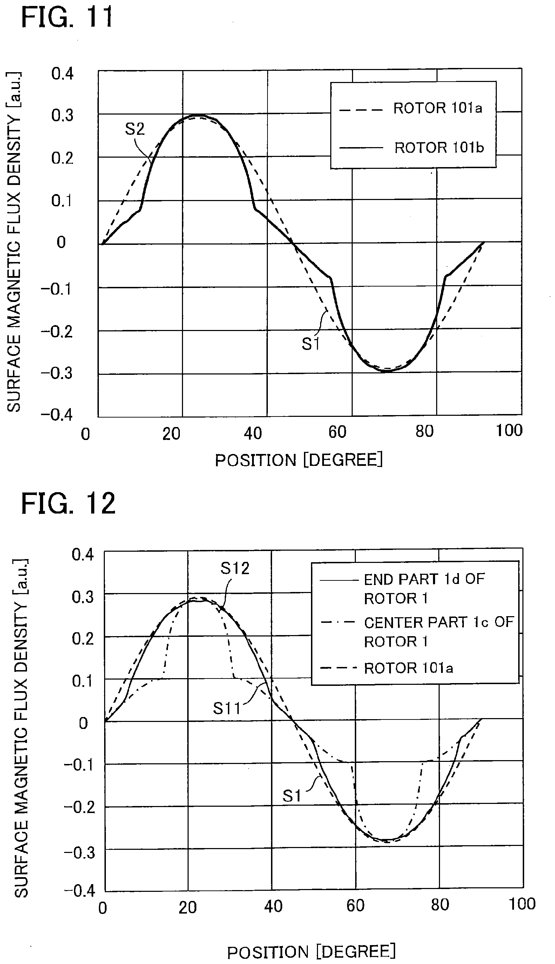

FIG. 11 is a graph showing the distribution of the surface magnetic flux density of the rotor 101a according to the first comparative example and distribution of the surface magnetic flux density of the rotor 101b according to the second comparative example. In FIG. 11, the horizontal axis represents a position in the circumferential direction R1 [deg.] on the outer circumference 101c of the rotor 101a or an outer circumference 101d of the rotor 101b. The vertical axis represents the surface magnetic flux density [a.u.]. Further, in FIG. 11, the solid line indicates the distribution of the surface magnetic flux density of the rotor 101a according to the first comparative example and the broken line indicates the distribution of the surface magnetic flux density of the rotor 101b according to the second comparative example.

As shown in FIG. 11, the distribution of the surface magnetic flux density of the rotor 101a according to the first comparative example is represented by a waveform S1 of an even sinusoidal wave. Meanwhile, the distribution of the surface magnetic flux density of the rotor 101b according to the second comparative example is also represented by a waveform S2 of a substantially sinusoidal wave being approximately even. Namely, in the rotor 101b according to the second comparative example, an abrupt change in the surface magnetic flux density is inhibited in the circumferential direction R1 as compared to the rotor 101a according to the first comparative example.

FIG. 12 is a graph showing distribution of the surface magnetic flux density of the rotor 1 according to the first embodiment and the distribution of the surface magnetic flux density of the rotor 101a according to the first comparative example. In FIG. 12, the horizontal axis represents the position in the circumferential direction R1 [deg.] on the outer circumference 1a of the rotor 1 or the outer circumference 101c of the rotor 101a. The vertical axis represents the surface magnetic flux density [a.u.]. Further, in FIG. 12, the solid line indicates the distribution of the surface magnetic flux density in a central part 1c of the rotor 1 according to the first embodiment in the axial direction and the chain line indicates the distribution of the surface magnetic flux density in the end part 1d of the rotor 1 according to the first embodiment in the axial direction. Furthermore, in FIG. 12, the broken line indicates the distribution of the surface magnetic flux density of the rotor 101a according to the first comparative example.

As shown in FIG. 12, the distribution of the surface magnetic flux density of the rotor 101a according to the first comparative example is represented by the waveform S1 of the even sinusoidal wave. Meanwhile, the distribution of the surface magnetic flux density in the end part 1d of the rotor 1 according to the first embodiment in the axial direction is also represented by a waveform S11 of a substantially sinusoidal wave being approximately even. Namely, in the end part 1d of the rotor 1 according to the first embodiment in the axial direction, an abrupt change in the surface magnetic flux density is inhibited in the circumferential direction R1. This is because the second width W2 (see FIG. 2) of the rare-earth magnet part 31 in the end part 20d of the ferrite bond magnet 20 in the axial direction is narrower than the first width W1 (see FIG. 2) of the rare-earth magnet part 31 in the central part 20c of the ferrite bond magnet 20 in the axial direction and the amount of use of the ferrite bond magnet 20 in the end part 20d in the axial direction is greater than the amount of use of the ferrite bond magnet 20 in the central part 20c in the axial direction.

The distribution of the surface magnetic flux density in the central part 1c of the rotor 1 according to the first embodiment is represented by a waveform S12 of a substantially sinusoidal wave. In the central part 1c of the rotor 1 in the axial direction, while magnetic flux density equivalent to that in the rotor 101a according to the first comparative example is obtained in a magnetic pole central part (a north pole or a south pole), magnetic flux density slightly less than that in the rotor 101a according to the first comparative example is obtained in an inter-pole part (between the north pole and the south pole). This is because the first width W1 is wider than the second width W2 in the rare-earth magnet part 31 shown in FIG. 2 and the amount of use of the ferrite bond magnet 20 in the central part 20c in the axial direction is less than the amount of use of the ferrite bond magnet 20 in the end part 20d. However, the decrease in the magnetic flux density in the inter-pole part in the central part 1c can be compensated for since the rotor 1 according to the first embodiment includes a plurality of rare-earth magnet parts 31. Accordingly, the rotor 1 according to the first embodiment is capable of achieving inductive voltage equivalent to that of the rotor 101a according to the first comparative example.

(Effects of First Embodiment)

As described above, according to the first embodiment, the rare-earth bond magnet 30 includes a plurality of rare-earth magnet parts 31 arranged at intervals in the circumferential direction R1. The rare-earth bond magnet 30 is more expensive than the ferrite bond magnet 20. In the rotor 1 according to the first embodiment, since the rare-earth bond magnet 30 includes a plurality of rare-earth magnet parts 31 arranged at intervals in the circumferential direction R1, the amount of use of the rare-earth bond magnet 30 is reduced, and thus the manufacturing cost of the rotor 1 can be reduced.

Further, according to the first embodiment, the first width W1 as the width in the circumferential direction of each of the plurality of rare-earth magnet parts 31 in the central part 20c of the ferrite bond magnet 20 in the axial direction is wider than the second width W2 as the width in the circumferential direction of each rare-earth magnet part 31 in the end part 20d of the ferrite bond magnet 20 in the axial direction. With this configuration, the magnetic pole of the rare-earth magnet part 31 at the central part 20c of the ferrite bond magnet 20 facing the stator core 91 in the radial direction is made stronger than the magnetic pole of the rare-earth magnet part 31 at the end part 20d of the ferrite bond magnet 20 in the axial direction. Therefore, a sufficient magnetic flux amount of the magnetic flux flowing from the rotor 1 to the stator 9 can be secured while reducing the manufacturing cost of the rotor 1.

Here, when the length L1 in the axial direction of the rotor 1 is longer than the length L9 in the axial direction of the stator core 91 as shown in FIG. 2, the magnetic flux amount of the interlinkage magnetic flux flowing from the permanent magnets (i.e., the ferrite bond magnet 20 and the rare-earth bond magnet 30) of the rotor 1 to the coil 92 of the stator 9 can be increased. On the other hand, there is a case where part of magnetic flux flowing from the end part 1d of the rotor 1, not facing the stator core 91 in the radial direction, toward the coil 92 turns into leakage flux. In such a case, a sufficient magnetic flux amount of the magnetic flux flowing from the rotor 1 to the stator 9 cannot be secured. In the first embodiment, the first width W1 of the rare-earth magnet part 31 is wider than the second width W2. With this configuration, the magnetic pole of the rare-earth magnet part 31 at the central part 20c of the ferrite bond magnet 20 in the axial direction is made stronger than the magnetic pole of the rare-earth magnet part 31 at the end part 20d of the ferrite bond magnet 20 in the axial direction. Accordingly, a sufficient magnetic flux amount of the magnetic flux flowing from the rotor 1 to the stator 9 can be secured.

Furthermore, according to the first embodiment, since the rare-earth bond magnet 30 includes a plurality of rare-earth magnet parts 31 arranged at intervals in the circumferential direction R1, an abrupt change in the surface magnetic flux density of the rotor 1 is inhibited, and thus the rotor 1 is capable of achieving inductive voltage equivalent to that of the rotor 101a according to the first comparative example. Thus, the rotor 1 according to the first embodiment is capable of achieving accuracy of rotation control equivalent to that of the rotor 101a according to the first comparative example.

Moreover, according to the first embodiment, the ferrite bond magnet 20 supported by the shaft 10 has the polar anisotropy. With this configuration, it is unnecessary to dispose a rotor core that forms a magnetic path on the inner side of the ferrite bond magnet 20 in the radial direction, and thus the number of components in the rotor 1 can be reduced and the weight of the rotor 1 can be reduced.

In addition, according to the first embodiment, the ferrite bond magnet 20 includes the first ferrite magnet part 41 and the second ferrite magnet part 42 aligned in the axial direction. In order to mold the ferrite bond magnet 20 including the groove parts 21 each having a shape corresponding to the shape of the rare-earth magnet part 31, namely, in order to mold the groove parts 21 in each of which the width W21 in the circumferential direction R1 in the central part 20c in the axial direction is wider than the width 22 in the circumferential direction R1 in the end part 20d in the axial direction, the mold needs to have a complicated structure. Thus, the facility for molding the ferrite bond magnet 20 gets expensive. In the first embodiment, the ferrite bond magnet 20 includes the first ferrite magnet part 41 and the second ferrite magnet part 42 divided from each other in the central part 20c in the axial direction. Accordingly, it is not necessary to use the mold for integrally molding the groove parts 21, and thus productivity of the ferrite bond magnet 20 can be increased.

**(Second Embodiment)**

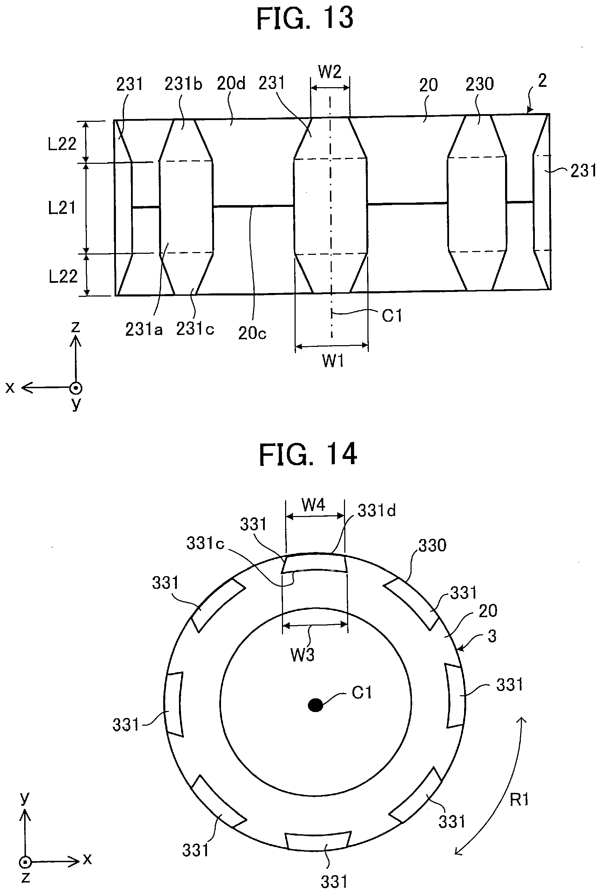

FIG. 13 is a side view showing the configuration of a rotor 2 according to a second embodiment. In FIG. 13, components identical or corresponding to components shown in FIG. 2 are assigned the same reference characters as in FIG. 2. The rotor 2 according to the second embodiment differs from the rotor 1 according to the first embodiment in the shape of a rare-earth magnet part 231. In other respects, the rotor 2 according to the second embodiment is the same as the rotor 1 according to the first embodiment. Thus, FIG. 2 is referred to in the following description. Incidentally, the shaft 10 (see FIG. 2) is not shown in FIG. 13.

As shown in FIG. 13, the rotor 2 includes the ferrite bond magnet 20 and a rare-earth bond magnet 230. The rare-earth bond magnet 230 includes a plurality of rare-earth magnet parts 231 arranged at intervals in the circumferential direction R1.

The first width W1 as a width in the circumferential direction R1 of each rare-earth magnet part 231 in the central part 20c of the ferrite bond magnet 20 in the axial direction is wider than the second width W2 as a width in the circumferential direction R1 of each rare-earth magnet part 231 in the end part 20d of the ferrite bond magnet 20 in the axial direction. With this configuration, the magnetic pole of the rare-earth magnet part 231 at the central part 20c of the ferrite bond magnet 20 is made stronger than the magnetic pole of the rare-earth magnet part 231 at the end part 20d of the ferrite bond magnet 20. Thus, a sufficient magnetic flux amount of the magnetic flux flowing from the rotor 2 to the stator 9 can be secured.

The rare-earth magnet part 231 includes a first part 231a and a plurality of second parts 231b and 231c connected to the first part 231a at positions on the outer side of the first part 231a in the axial direction. The first part 231a is a wider part having the first width W1 in the rare-earth magnet part 231. In the second embodiment, the width of the first part 231a in the circumferential direction is constant in the axial direction. Namely, in the second embodiment, the width of the first part 231a in the circumferential direction R1 (i.e., the first width W1) is constant in the axial direction.

The width of each of the plurality of second parts 231b and 231c in the circumferential direction R1 gradually increases toward the first part 231a. Namely, as the rotor 2 is viewed in the radial direction, the shape of the second part 231b is a trapezoidal shape. Incidentally, the width of the second part 231b in the circumferential direction R1 may also be constant in the axial direction. Further, the rare-earth magnet part 231 may also be configured to include only one of the plurality of second parts 231b and 231c.

The length L21 of the first part 231a in the axial direction is longer than the length L22 of the second part 231b, 231c in the axial direction. With this configuration, in the rare-earth magnet part 231, the magnetic pole of the rare-earth magnet part 231 at the central part 20c of the ferrite bond magnet 20 is made further stronger than the magnetic pole of the rare-earth magnet part 231 at the end part 20d of the ferrite bond magnet 20. Accordingly, it is made easier to secure a sufficient magnetic flux amount of the magnetic flux flowing from the rotor 2 to the stator 9.

(Effects of Second Embodiment)

As described above, according to the second embodiment, the rare-earth bond magnet 230 includes a plurality of rare-earth magnet parts 231 arranged at intervals in the circumferential direction R1. The rare-earth bond magnet 230 is more expensive than the ferrite bond magnet 20. In the rotor 2 according to the second embodiment, since the rare-earth bond magnet 230 includes a plurality of rare-earth magnet parts 231 arranged at intervals in the circumferential direction R1, the amount of use of the rare-earth bond magnet 230 is reduced, and thus the manufacturing cost of the rotor 2 can be reduced.

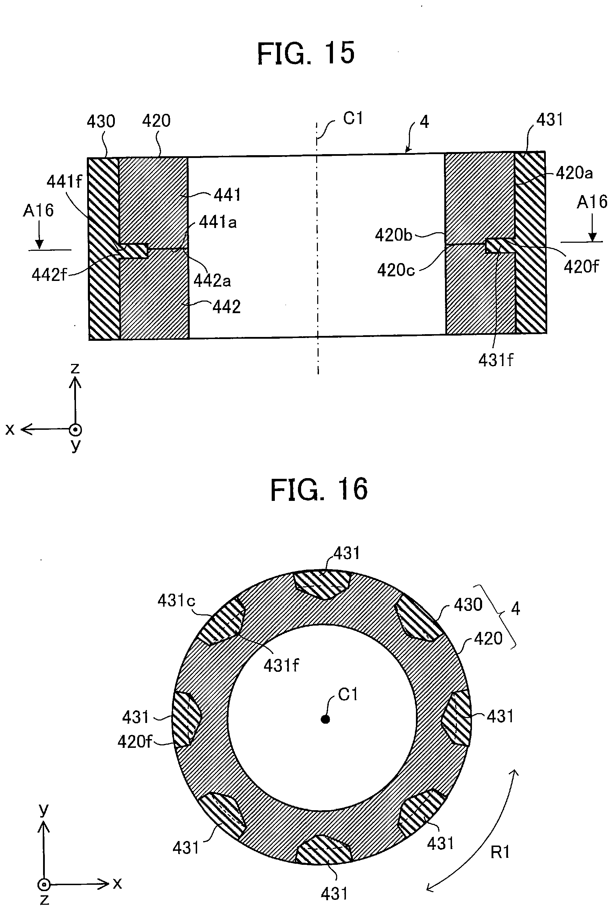

Further, according to the second embodiment, the first width W1 as the width in the circumferential direction of each of the plurality of rare-earth magnet parts 231 in the central part 20c of the ferrite bond magnet 20 in the axial direction is wider than the second width W2 as the width in the circumferential direction of each rare-earth magnet part 231 in the end part 20d of the ferrite bond magnet 20 in the axial direction. With this configuration, the magnetic pole of the rare-earth magnet part 31 at the central part 20c of the ferrite bond magnet 20 facing the stator core 91 in the radial direction is made stronger than the magnetic pole of the rare-earth magnet part 31 at the end part 20d of the ferrite bond magnet 20 in the axial direction. Therefore, a sufficient magnetic flux amount of the magnetic flux flowing from the rotor 2 to the stator 9 can be secured while reducing the manufacturing cost of the rotor 2. Furthermore, a sufficient magnetic flux amount of the magnetic flux flowing from the rotor 2 to the stator 9 can be secured without forming an overhang part 431f shown in FIGS. 15 and 16, which will be described later, in the rare-earth magnet part 231.

Moreover, according to the second embodiment, the rare-earth magnet part 231 includes the first part 231a and the second parts 231b and 231c connected to the first part 231a at positions on the outer side of the first part 231a in the axial direction. The first part 231a has the first width W1 which is constant in the axial direction. The length L21 of the first part 231a in the axial direction is longer than the length L22 of the second part 231b, 231c in the axial direction. With this configuration, the magnetic pole of the rare-earth magnet part 231 at the central part 20c of the ferrite bond magnet 20 is made further stronger than the magnetic pole of the rare-earth magnet part 231 at the end part 20d of the ferrite bond magnet 20. Accordingly, it is made easier to secure a sufficient magnetic flux amount of the magnetic flux flowing from the rotor 2 to the stator 9.

(Third Embodiment)

FIG. 14 is a plan view showing the configuration of a rotor 3 according to a third embodiment. In FIG. 14, components identical or corresponding to components shown in FIG. 3 are assigned the same reference characters as in FIG. 3. The rotor 3 according to the third embodiment differs from the rotor 1 according to the first embodiment in the shape of a rare-earth magnet part 331. Incidentally, the shaft 10 and the resin part 60 (see FIG. 3) are not shown in FIG. 14.

As shown in FIG. 14, the rotor 3 includes the ferrite bond magnet 20 and a rare-earth bond magnet 330. The rare-earth bond magnet 330 includes a plurality of rare-earth magnet parts 331 arranged at intervals in the circumferential direction R1.

In FIG. 14, a third width W3 represents the width in the circumferential direction of an innermost part 331c of the rare-earth magnet part 331 in the radial direction.

A fourth width W4 represents the width in the circumferential direction of an outermost part 331d of the rare-earth magnet part 331 in the radial direction. The third width W3 is wider than the fourth width W4. Namely, the third width W3 and the fourth width W4 satisfy the following expression (3):

$$W3 > W4 \qquad (3)$$

With this configuration, a joint area of the ferrite bond magnet 20 and the rare-earth bond magnet 330 increases. Accordingly, falling off of the rare-earth bond magnet 330 from the ferrite bond magnet 20 can be prevented even when peeling occurs at the interface between the ferrite bond magnet 20 and the rare-earth bond magnet 330 due to expansion or contraction caused by a temperature change or centrifugal force acting on the rotor 3.

As above, in the second embodiment, the third width W3 is wider than the fourth width W4 in the rare-earth magnet part 331, and thus each groove part 221 of the ferrite bond magnet 20 in which the rare-earth magnet part 331 is disposed is a dovetail groove.

(Effects of Third Embodiment)

As described above, according to the third embodiment, the third width W3 as the width in the circumferential direction of the innermost part 331c of the rare-earth magnet part 331 in the radial direction is wider than the fourth width W4 as the width in the circumferential direction of the outermost part 331d of the rare-earth magnet part 331 in the radial direction. With this configuration, the joint area of the ferrite bond magnet 20 and the rare-earth bond magnet 330 increases. Accordingly, the falling off of the rare-earth bond magnet 330 from the ferrite bond magnet 20 can be prevented even when peeling occurs at the interface between the ferrite bond magnet 20 and the rare-earth bond magnet 330 due to expansion or contraction caused by a temperature change or centrifugal force acting on the rotor 3.

**(Fourth Embodiment)**

FIG. 15 is a sectional view showing the configuration of a rotor 4 according to a fourth embodiment. FIG. 16 is a sectional view of the rotor 4 shown in FIG. 15 taken along the line A16 - A16. The rotor 4 according to the fourth embodiment differs from the rotor 1 according to the first embodiment in the shapes of a ferrite bond magnet 420 and a rare-earth bond magnet 430. In other respects, the rotor 4 according to the fourth embodiment is the same as the rotor 1 according to the first embodiment. Thus, FIG. 2 is referred to in the following description. Incidentally, the shaft 10 is not shown in FIGS. 15 and 16.

As shown in FIGS. 15 and 16, the rotor 4 includes the ferrite bond magnet 420 and the rare-earth bond magnet 430.

The ferrite bond magnet 420 includes a first ferrite magnet part 441 and a second ferrite magnet part 442 aligned in the axial direction. A step part 420f is formed in a central part 420c of the ferrite bond magnet 420 in the axial direction. The step part 420f is recessed from an outer periphery 420a toward an inner circumference 420b of the ferrite bond magnet 420. The step part 420f is formed by a first step part 441f formed in the first ferrite magnet part 441 and a second step part 442f formed in the second ferrite magnet part 442. The first step part 441f is formed at an end face 441a of the first ferrite magnet part 441 in the axial direction in contact with the second ferrite magnet part 442. The second step part 442f is formed at an end face 442a of the second ferrite magnet part 442 in the axial direction in contact with the first ferrite magnet part 441.

The rare-earth bond magnet 430 includes a plurality of rare-earth magnet parts 431 arranged at intervals in the circumferential direction R1. The rare-earth magnet part 431 includes an overhang part 431f formed in a central part 431c in the axial direction facing the stator core 91 (see FIG. 2) in the radial direction. The overhang part 431f extends inward in the radial direction from the central part 431c of the rare-earth magnet part 431 in the axial direction. With this configuration, in the rare-earth magnet part 431, the magnetic pole of the rare-earth magnet part 431 at the central part 420c of the ferrite bond magnet 420 is made further stronger than the magnetic pole of the rare-earth magnet part 431 at each end part 420d of the ferrite bond magnet 420. Accordingly, the magnetic flux amount of the interlinkage magnetic flux flowing from the rotor 4 to the coil 92 can be increased further.

The overhang part 431f and the step part 420f are joined to each other. With this configuration, the joint area of the ferrite bond magnet 20 and the rare-earth bond magnet 30 increases. Accordingly, the falling off of the rare-earth bond magnet 430 from the ferrite bond magnet 420 can be prevented even when peeling occurs at the interface between the ferrite bond magnet 420 and the rare-earth bond magnet 430 due to expansion or contraction caused by a temperature change or centrifugal force acting on the rotor 4.

(Effects of Fourth Embodiment)

As described above, according to the fourth embodiment, the rare-earth magnet part 431 includes the overhang part 431f formed in the central part 431c in the axial direction facing the stator core 91 in the radial direction. With this configuration, in the rare-earth magnet part 431, the magnetic pole of the rare-earth magnet part 431 at the central part 420c of the ferrite bond magnet 420 is made further stronger than the magnetic pole of the rare-earth magnet part 431 at the end part 420d of the ferrite bond magnet 420. Accordingly, the magnetic flux amount of the interlinkage magnetic flux flowing from the rotor 4 to the coil 92 can be increased. Namely, the magnetic flux amount of effective magnetic flux necessary for the driving of the motor can be increased.

Further, according to the fourth embodiment, the overhang part 431f of the rare-earth magnet part 431 and the step part 420f of the ferrite bond magnet 420 are joined to each other. With this configuration, the joint area of the ferrite bond magnet 20 and the rare-earth bond magnet 30 increases. Accordingly, the falling off of the rare-earth bond magnet 430 from the ferrite bond magnet 420 can be prevented even when peeling occurs at the interface between the ferrite bond magnet 420 and the rare-earth bond magnet 430 due to expansion or contraction caused by a temperature change or centrifugal force acting on the rotor 4.

**(Fifth Embodiment)**

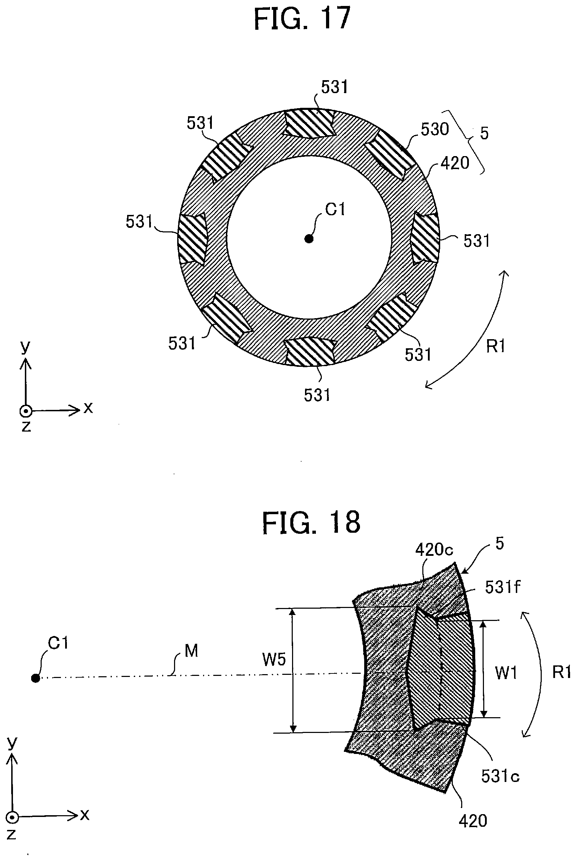

FIG. 17 is a sectional view showing the configuration of a rotor 5 according to a fifth embodiment. FIG. 18 is a partial sectional view showing the configuration of the rotor 5 shown in FIG. 17. In FIGS. 17 and 18, the same reference characters as in FIGS. 15 and 16 are assigned to components. The rotor 5 according to the fifth embodiment differs from the rotor 4 according to the fourth embodiment in the shape of an overhang part 531f of a rare-earth magnet part 531. Incidentally, the shaft 10 is not shown in FIGS. 17 and 18.

As shown in FIG. 17, the rotor 5 includes the ferrite bond magnet 420 and a rare-earth bond magnet 530. The rare-earth bond magnet 530 includes a plurality of rare-earth magnet parts 531 arranged at intervals in the circumferential direction R1.

As shown in FIG. 18, the rare-earth magnet part 531 includes the overhang part 531f formed in a central part 531c in the axial direction facing the stator core 91 (see FIG. 2) in the radial direction. The overhang part 531f extends inward in the radial direction from the central part 531c of the rare-earth magnet part 531 in the axial direction. The overhang part 531f and the step part 420f of the ferrite bond magnet 420 are joined to each other.

A fifth width W5 as the width of the overhang part 531f in the circumferential direction R1 is wider than the width A2 of the rare-earth magnet part 531 in the circumferential direction R1. Here, the "width of the overhang part 531f in the circumferential direction R1" is the length of a straight line extending in the overhang part 531f in a direction orthogonal to a straight line M connecting the axis C1 and the overhang part 531f.

As described above, according to the fifth embodiment, the width W5 of the overhang part 531f of the rare-earth magnet part 531 in the circumferential direction R1 is wider than the first width W1 of the rare-earth magnet part 531. With this configuration, the joint area of the overhang part 531f and the central part 420c of the ferrite bond magnet 420 in the axial direction increases, and thus the rare-earth bond magnet 530 is further less likely to fall off from the ferrite bond magnet 420.

**(Sixth Embodiment)**

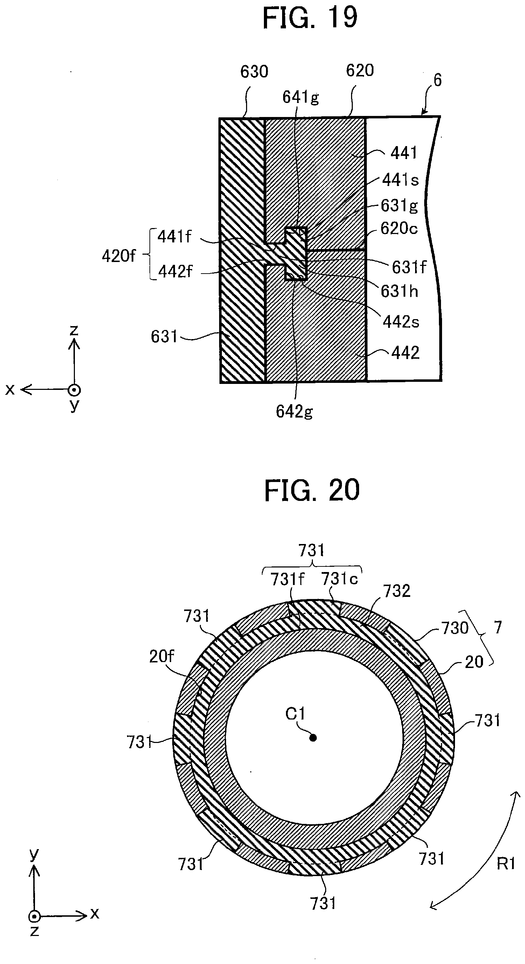

FIG. 19 is a partial sectional view showing the configuration of a rotor 6 according to a sixth embodiment. In FIG. 19, components identical or corresponding to components shown in FIG. 15 or 16 are assigned the same reference characters as in FIG. 15 or 16. The rotor 6 according to the sixth embodiment differs from the rotor 4 according to the fourth embodiment in the shapes of a ferrite bond magnet 620 and a rare-earth bond magnet 630.

As shown in FIG. 19, the rotor 6 includes the ferrite bond magnet 620 and the rare-earth bond magnet 630. The ferrite bond magnet 620 includes a first ferrite magnet part 441 and a second ferrite magnet part 442 aligned in the axial direction. The first ferrite magnet part 441 includes a first concave part 641g formed at a bottom surface 441s of the first step part 441f. The second ferrite magnet part 442 includes a second concave part 642g formed at a bottom surface 442s of the second step part 442f. Incidentally, the ferrite bond magnet 620 may also be configured to include only one of the first and second concave parts 641g and 642g. Further, the ferrite bond magnet 620 may be configured to include a plurality of first concave parts 641g or a plurality of second concave parts 642g.

The rare-earth bond magnet 630 includes rare-earth magnet parts 631. The rare-earth magnet part 631 includes an overhang part 631f. The overhang part 631f includes a first convex part 631g that is fitted in the first concave part 641g and a second convex part 631h that is fitted in the second concave part 642g. With this configuration, the rare-earth bond magnet 630 is further less likely to fall off from the ferrite bond magnet 620. Since the overhang part 631f includes the first convex part 631g and the second convex part 631h as above, the length in the axial direction of an inner circumferential side of the overhang part 631f where the first convex part 631g and the second convex part 631h are formed is longer than the length in the axial direction of an outer circumferential side of the overhang part 631f.

As described above, in the rotor 6 according to the sixth embodiment, the first convex part 631g of the overhang part 631f of the rare-earth magnet part 631 is fitted in the first concave part 641g formed in the first step part 441f of the ferrite bond magnet 620. With this configuration, the rare-earth bond magnet 630 is further less likely to fall off from the ferrite bond magnet 620.

Further, in the rotor 6 according to the sixth embodiment, the second convex part 631h of the overhang part 631f is fitted in the second concave part 642g formed in the second step part 442f of the ferrite bond magnet 620. With this configuration, the rare-earth bond magnet 630 is further less likely to fall off from the ferrite bond magnet 620.

(Seventh Embodiment)

FIG. 20 is a sectional view showing the configuration of a rotor 7 according to a seventh embodiment. In FIG. 20, components identical or corresponding to components shown in FIGS. 1 to 3 are assigned the same reference characters as in FIGS. 1 to 3. The rotor 7 according to the seventh embodiment differs from the rotor 1 according to the first embodiment in the configuration of a rare-earth bond magnet 730.

As shown in FIG. 20, the rotor 7 includes the ferrite bond magnet 20 and the rare-earth bond magnet 730.

The rare-earth bond magnet 730 includes a plurality of rare-earth magnet parts 731 arranged at intervals in the circumferential direction R1 and a connection part 732 connecting rare-earth magnet parts 731 adjoining in the circumferential direction R1 among the plurality of rare-earth magnet parts 731. The rare-earth magnet part 31 includes an overhang part 731f formed in a central part 731c in the axial direction. The overhang part 731f and a concave part 20f formed in the central part of the ferrite bond magnet 20 in the axial direction are joined to each other. In FIG. 20, the concave part 20f is a groove part in a ring shape about the axis C1.

The connection part 732 connects the overhang parts 731f of rare-earth magnet parts 731 adjoining in the circumferential direction R1. This increases rigidity of the rare-earth bond magnet 730, and thus the rare-earth bond magnet 730 is further less likely to fall off from the ferrite bond magnet 20. The connection part 732 and the concave part 20f of the ferrite bond magnet 20 are joined to each other.

As described above, according to the seventh embodiment, the rare-earth bond magnet 730 includes the connection part 732 connecting rare-earth magnet parts 731 adjoining in the circumferential direction R1 among the plurality of rare-earth magnet parts 731 arranged at intervals in the circumferential direction R1. With this configuration, the rigidity of the rare-earth bond magnet 730 increases, and thus the rare-earth bond magnet 730 is further less likely to fall off from the ferrite bond magnet 20.

(Eighth Embodiment)

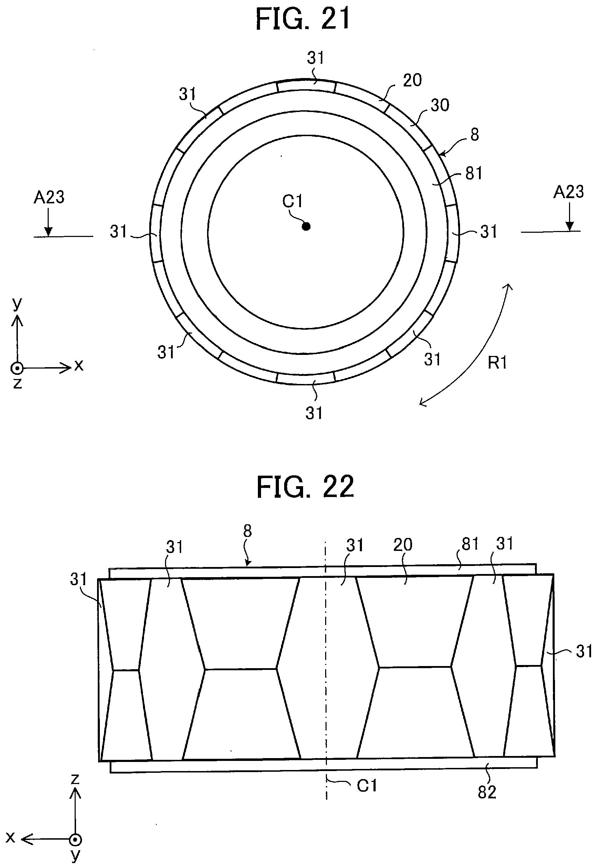

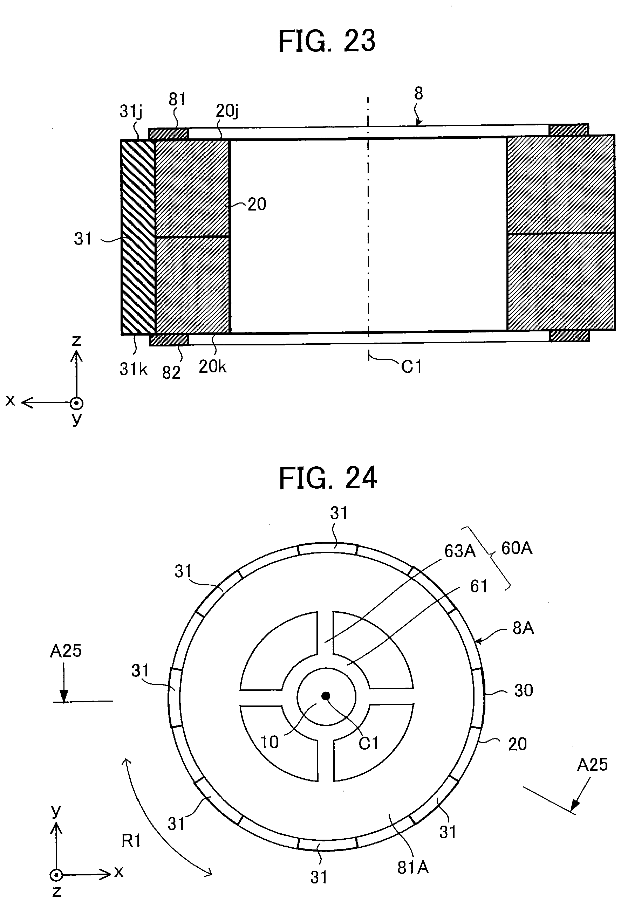

FIG. 21 is a side view showing the configuration of a rotor 8 according to an eighth embodiment. FIG. 22 is a plan view showing the configuration of the rotor 8 according to the eighth embodiment. FIG. 23 is a sectional view of the rotor 8 shown in FIG. 21 taken along the line A23 - A23. In FIGS. 21 to 23, components identical or corresponding to components shown in FIGS. 1 to 3 are assigned the same reference characters as in FIGS. 1 to 3. The rotor 8 according to the eighth embodiment differs from the rotor according to any one of the first to seventh embodiments in further including ring members 81 and 82. Incidentally, the shaft 10 and the resin part 60 (see FIG. 3) are not shown in FIGS. 21 to 23.

As shown in FIGS. 21 to 23, the rotor 8 includes the ferrite bond magnet 20, the rare-earth bond magnet 30 and a plurality of ring members 81 and 82.

Each of the ring members 81 and 82 is a member having a ring shape about at the axis C1. The ring members 81 and 82 are formed of a resin such as unsaturated polyester resin, for example.

The ring member 81 is situated on the +z-axis side relative to the ferrite bond magnet 20 and the rare-earth bond magnet 30. The ring member 81 is fixed to an end face 20j of the ferrite bond magnet 20 facing the +z-axis direction and end faces 31j of the rare-earth magnet parts 31 facing the +z-axis direction.

The ring member 82 is situated on the -z-axis side relative to the ferrite bond magnet 20 and the rare-earth bond magnet 30. The ring member 82 is fixed to an end face 20k of the ferrite bond magnet 20 facing the -z-axis direction and end faces 31k of the rare-earth magnet parts 31 facing the -z-axis direction. Incidentally, the rotor 8 may also be configured to include only one of the plurality of ring members 81 and 82.

(Effects of Eighth Embodiment)

As described above, according to the eighth embodiment, the rotor 8 includes the ring member 81 fixed to the end face 20j of the ferrite bond magnet 20 facing the +z-axis direction and the end faces 31j of the rare-earth magnet parts 31 facing the +z-axis direction. With this configuration, the rare-earth magnet parts 31 are connected to the ferrite bond magnet 20 via the ring member 81, and thus the rare-earth magnet parts 31 are less likely to fall off from the ferrite bond magnet 20.

Further, the rotor 8 according to the eighth embodiment includes the ring member 82 fixed to the end face 20k of the ferrite bond magnet 20 facing the -z-axis direction and the end faces 31k of the rare-earth magnet parts 31 facing the -z-axis direction. With this configuration, the rare-earth magnet parts 31 are connected to the ferrite bond magnet 20 via the plurality of ring members 81 and 82, and thus the rare-earth magnet parts 31 are less likely to fall off from the ferrite bond magnet 20.

(First Modification of Eighth Embodiment)

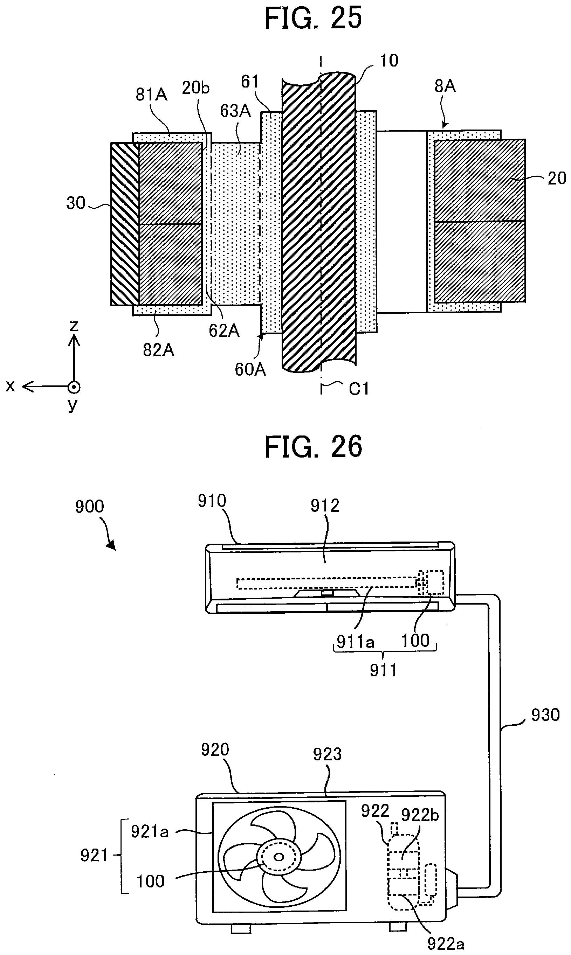

FIG. 24 is a plan view showing the configuration of a rotor 8A according to a first modification of the eighth embodiment. FIG. 22 is a sectional view of the rotor 8A shown in FIG. 25 taken along the line A25 - A25. The rotor 8A according to the first modification of the eighth embodiment differs from the rotor 8 according to the eighth embodiment in that ring members 81A and 82A are connected to a resin part 60A.

As shown in FIGS. 24 and 25, the rotor 8A includes the shaft 10, the ferrite bond magnet 20, the rare-earth bond magnet 30, the ring members 81A and 82A as a first resin part, and the resin part 60A as a second resin part.

The resin part 60A includes the inner cylinder part 61 supported by the shaft 10, an outer cylinder part 62A fixed to the inner circumference 20b of the ferrite bond magnet 20, and a plurality of ribs 63A connecting the inner cylinder part 61 and the outer cylinder part 62A.

The ring members 81A and 82A are connected to the resin part 60A (specifically, the outer cylinder part 62A and the ribs 63A). In the first modification of the eighth embodiment, the ring members 81A and 82A are connected to the outer cylinder part 62A of the resin part 60A by means of integral molding. Namely, in the first modification of the eighth embodiment, the shaft 10, the ferrite bond magnet 20 and the rare-earth bond magnet 30 are connected together via the resin part 60A and the ring members 81A and 82A.

As described above, according to the first modification of the eighth embodiment, in the rotor 8A, the ring members 81A and 82A are connected to the resin part 60A. With this configuration, when the shaft 10 and the ferrite bond magnet 20 are integrally molded via the resin part 60A made of a resin, the ring members 81A and 82A can also be molded at the same time, and thus manufacturing steps of the rotor 8A can be reduced.

Here, the natural frequency of the rotor 8A changes depending on the rigidity of the rotor 8A. The rigidity of the rotor 8A can be adjusted by changing the width in the circumferential direction R1 and the length in the radial direction of the rib 63A and the number of ribs 63A in the resin part 60A, for example. In the first modification of the eighth embodiment, the length in the radial direction of each rib 63A is increased since the ribs 63A are connected to the ring members 81A and 82A. Accordingly, the rigidity of the rotor 8A can be changed. Namely, the natural frequency of the rotor 8A can be changed. Thus, the occurrence of resonance can be inhibited and vibrational characteristics of the rotor 8A can be adjusted.

Further, the inertia moment of the rotor 8A changes depending on the mass of the rotor 8A. The mass of the rotor 8A can be adjusted by changing the width in the circumferential direction R1 and the length in the radial direction of the rib 63A and the number of ribs 63A. With the increase in the inertia moment, the rotation of the rotor 8A can be more stabilized although higher starting torque is needed. In the first modification of the eighth embodiment, the length in the radial direction of each rib 63A is increased since the ribs 63A are connected to the ring members 81 and 82 as described above. With this configuration, the inertia moment of the rotor 8A can be increased. As above, in the first modification of the eighth embodiment, the natural frequency and the inertia moment of the rotor 8A can be adjusted since the ring members 81A and 82A are connected to the resin part 60A.

**(Ninth Embodiment)**

FIG. 26 is a diagram schematically showing the configuration of an air conditioner 900 according to a ninth embodiment. As shown in FIG. 26, the air conditioner 900 includes an indoor unit 910 and an outdoor unit 920 connected to the indoor unit 910 via a refrigerant pipe 930. The air conditioner 900 is capable of executing an operation such as a cooling operation of blowing out cool air from the indoor unit 910 or a heating operation of blowing out warm air from the indoor unit 910, for example.

The indoor unit 910 includes an indoor blower 911 as a blower and a housing 912 that covers the indoor blower 911. The indoor blower 911 includes the motor 100 and an impeller 911a fixed to the shaft 10 of the motor 100. The impeller 911a is driven by the motor 100 to generate an airflow. The impeller 911a is a cross-flow fan, for example.

The outdoor unit 920 includes an outdoor blower 921 as a blower, a compressor 922, and a housing 923 that covers the outdoor blower 921 and the compressor 922. The outdoor blower 921 includes the motor 100 and an impeller 921a fixed to the shaft 10 (see FIG. 1) of the motor 100. The impeller 921a is driven by the motor 100 to generate an airflow. The impeller 921a is a propeller fan, for example. The compressor 922 includes a motor 922a and a compression mechanism part 922b driven by the motor 922a.

As described above, in the air conditioner 900 according to the ninth embodiment, the motor 100 according to the first embodiment is applied to the indoor blower 911 and the outdoor blower 921. In the motor 100 according to the first embodiment, the interlinkage magnetic flux flowing from the rotor 1 to the coil 92 (see FIGS. 1 and 2) can be increased, and thus reliability of the motor 100 increases. Accordingly, reliability of the indoor blower 911 and the outdoor blower 921 including the motor 100 also increases. Further, reliability of the air conditioner 900 including the indoor blower 911 and the outdoor blower 921 also increases.

Incidentally, the motor 100 may also be provided in only one of the indoor blower 911 and the outdoor blower 921. Further, the motor 100 may also be applied to the motor 922a of the compressor 922. Furthermore, the motor 100 according to the ninth embodiment may be installed not only in the air conditioner 900 but also in equipment of a different type.

**DESCRIPTION OF REFERENCE CHARACTERS**

1, 2, 3, 4, 5, 6, 7, 8, 8A: rotor, 9: stator, 10: shaft, 20, 420, 620: ferrite bond magnet, 20a, 420a: outer periphery, 20c, 420c: central part, 20d: end part, 30, 230, 330, 430, 530, 630, 730: rare-earth bond magnet, 31, 231, 331, 431, 531, 631, 731: rare-earth magnet part, 41, 441: first ferrite magnet part, 42, 442: second ferrite magnet part, 60, 60A: resin part, 81, 81A, 82, 82A: ring member, 91: stator core, 100: motor, 231a: first part, 231b: second part, 420f: step part, 431f, 531f, 731f: overhang part, 441s, 442s: bottom surface, 631g: first convex part, 631h: second convex part, 641g: first concave part, 642g: second concave part, 732: connection part, 900: air conditioner, 910: indoor unit, 911: indoor blower, 911a, 921a: impeller, 920: outdoor unit, 921: outdoor blower, C1: axis line, L1, L9, L21, L22: length in axial direction, W1: first width, W2: second width, W3: third width, W4: fourth width, W5: fifth width.

**Claims**

1. A rotor comprising:

   a rotary shaft;
   a first permanent magnet supported by the rotary shaft; and
   a second permanent magnet supported by an outer periphery of the first permanent magnet and having a magnetic pole stronger than a magnetic pole of the first permanent magnet, wherein the second permanent magnet comprises a plurality of magnet parts arranged at intervals in a circumferential direction of the first permanent magnet, and wherein a first width as a width in the circumferential direction of each of the plurality of magnet parts at a central part of the first permanent magnet in an axial direction of the rotary shaft is wider than a second width as a width in the circumferential direction of each of the magnet parts at an end part of the first permanent magnet in the axial direction.

2. The rotor according to claim 1, wherein a width of the magnet part in the circumferential direction gradually increases from the end part toward the central part of the first permanent magnet in the axial direction.

3. The rotor according to claim 1 or 2, wherein the magnet part comprises:

   a first part; and
   a second part that is connected to the first part at a position on an outer side of the first part in the axial direction,
   wherein a width of the second part in the circumferential direction gradually increases toward the first part.

4. The rotor according to claim 3, wherein a width of the first part in the circumferential direction is constant in the axial direction.

5. The rotor according to claim 3 or 4, wherein a length of the first part in the axial direction is longer than a length of the second part in the axial direction.

6. The rotor according to any one of claims 1 to 5, wherein the first permanent magnet comprises a first split magnet part and a second split magnet part arranged in the axial direction.

7. The rotor according to any one of claims 1 to 6, wherein a third width as a width in the circumferential direction of an innermost part of the magnet part in a radial direction of the second permanent magnet is greater than a fourth width as a width in the circumferential direction of an outermost part of the magnet part in the radial direction.

8. The rotor according to any one of claims 1 to 7, wherein the first permanent magnet has a step part formed in the central part in the axial direction, and wherein the magnet part has an overhang part that is fitted in the step part.

9. The rotor according to claim 8, wherein a fifth width as a width of the overhang part in the circumferential direction is wider than the first width.

10. The rotor according to claim 8 or 9, wherein the first permanent magnet has a concave part formed at a bottom surface of the step part, and wherein the overhang part has a convex part that is fitted in the concave part.

11. The rotor according to any one of claims 1 to 10, wherein the second permanent magnet has a connection part that connects the magnet parts adjoining in the circumferential direction among the plurality of magnet parts.

12. The rotor according to any one of claims 1 to 11, further comprising a first resin part that is fixed to the first permanent magnet and the second permanent magnet in the axial direction.

13. The rotor according to claim 12, further comprising a second resin part that connects the rotary shaft and the first permanent magnet, wherein the first resin part is connected to the second resin part.

14. The rotor according to any one of claims 1 to 13, wherein the first permanent magnet is a ferrite bond magnet, and wherein the second permanent magnet is a rare-earth bond magnet.

15. The rotor according to any one of claims 1 to 14, wherein the rotor has 2n magnetic poles (n: natural number greater than or equal to 1), and

wherein the first permanent magnet and the second permanent magnet have polar anisotropy.

16. A motor comprising:

the rotor according to any one of claims 1 to 15; and
a stator.

17. The motor according to claim 16, wherein the stator comprises a stator core, and
wherein a length of the rotor in the axial direction is longer than a length of the stator core in the axial direction.

18. A blower comprising:

the motor according to claim 16 or 17; and
an impeller that is driven by the motor.

19. An air conditioner comprising:

an indoor unit; and
an outdoor unit that is connected to the indoor unit,
wherein at least one of the indoor unit and the outdoor unit comprises the motor according to claim 16 or 17.

# FIG. 1

# FIG. 2

# FIG. 3

# FIG. 4

# FIG. 5

# FIG. 6

# FIG. 7

START

ST1

FORM ROTOR BODY 50

ST2

CONNECT ROTOR BODY 50
TO SHAFT 10

ST3

MAGNETIZE ROTOR BODY 50

END

# FIG. 8

START

FILL MATERIAL OF FIRST AND SECOND
FERRITE MAGNET PARTS 41 AND 42
IN FIRST MOLD — ST11

ORIENTATE AND MOLD
FIRST AND SECOND FERRITE MAGNET
PARTS 41 AND 42 — ST12

COOL FIRST AND SECOND
FERRITE MAGNET PARTS 41 AND 42 — ST13

TAKE OUT FIRST AND SECOND
FERRITE MAGNET PARTS 41 AND 42
FROM FIRST MOLD — ST14

DEMAGNETIZE FIRST AND SECOND
FERRITE MAGNET PARTS 41 AND 42 — ST15

PLACE FIRST AND SECOND
FERRITE MAGNET PARTS 41 AND 42
IN SECOND MOLD — ST16

FILL MATERIAL OF RARE-EARTH
BOND MAGNET 31 IN SECOND MOLD — ST17

ORIENTATE AND MOLD
RARE-EARTH BOND MAGNET 31 — ST18

COOL RARE-EARTH BOND MAGNET 31 — ST19

TAKE OUT ROTOR BODY 50 FROM
SECOND MOLD — ST20

DEMAGNETIZE ROTOR BODY 50 — ST21

END

EP 4 213 346 A1

# FIG. 9

FIRST COMPARATIVE
EXAMPLE

## FIG. 10(A)

SECOND COMPARATIVE
EXAMPLE

## FIG. 10(B)

SECOND COMPARATIVE
EXAMPLE

## FIG. 11

## FIG. 12

# FIG. 13

# FIG. 14

# FIG. 15

# FIG. 16

# FIG. 17

# FIG. 18

# FIG. 19

# FIG. 20

# FIG. 21

# FIG. 22

## FIG. 23

## FIG. 24

# FIG. 25

# FIG. 26

**INTERNATIONAL SEARCH REPORT**

International application No.

PCT/JP2020/034033

A.  CLASSIFICATION OF SUBJECT MATTER
Int. Cl. H02K1/27(2006.01)i
FI: H02K1/27 501A, H02K1/27 501M

According to International Patent Classification (IPC) or to both national classification and IPC

B.  FIELDS SEARCHED

Minimum documentation searched (classification system followed by classification symbols)
Int. Cl. H02K1/27

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | WO 2020/129123 A1 (MITSUBISHI ELECTRIC CORP.) 25 June 2020, paragraphs [0016]-[0021], [0039]- | 1-3, 6-7, 11, 14-16, 18-19 |
| Y | [0051], [0103]-[0110], [0119]-[0130], fig. 16-21, 37, 38, 41-43 | 4-5, 8-10, 12-13, 17 |
| Y | CN 104836353 A (ZHUHAI GREE REFRIGERATION TECHNOLOGY CENTER OF ENERGY SAVING AND ENVIRONMENTAL PROTECTION CO., LTD.) 12 August 2015, paragraph [0038], fig. 4, 5 | 4-5 |
| Y | JP 7-031120 A (MINEBEA CO., LTD.) 31 January 1995, paragraphs [0011]-[0017], fig. 1, 2 | 8-10 |

☒  Further documents are listed in the continuation of Box C.          ☒  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14.10.2020 | 02.11.2020 |

| Name and mailing address of the ISA/ | Authorized officer |
|---|---|
| Japan Patent Office
3-4-3, Kasumigaseki, Chiyoda-ku,
Tokyo 100-8915, Japan | |
| | Telephone No. |

Form PCT/ISA/210 (second sheet) (January 2015)

**INTERNATIONAL SEARCH REPORT**

International application No.

PCT/JP2020/034033

C (Continuation).  DOCUMENTS CONSIDERED TO BE RELEVANT

| Category* | Citation of document, with indication, where appropriate, of the relevant passages | Relevant to claim No. |
|---|---|---|
| Y | WO 2018/016067 A1 (MITSUBISHI ELECTRIC CORP.) 25 January 2018, paragraphs [0029]-[0043], [0073], fig. 4 | 12-13 |
| Y | JP 2009-027842 A (TOSHIBA CORP.) 05 February 2009, paragraph [0018], fig. 1 | 17 |
| Y | WO 2013/111301 A1 (MITSUBISHI ELECTRIC CORP.) 01 August 2013, paragraph [0020], fig. 1 | 17 |
| A | JP 59-092759 A (TOKYO SHIBAURA ELECTRIC CO., LTD.) 29 May 1984, entire text, all drawings | 1-19 |
| A | Microfilm of the specification and drawings annexed to the request of Japanese Utility Model Application No. 150209/1984 (Laid-open No. 065868/1986) (TOSHIBA CORP.) 06 May 1986, entire text, all drawings | 1-19 |
| A | US 2019/0027984 A1 (SIEMENS AKTIENCESELLSCHAFT) 24 January 2019, fig. 11 | 8-10 |
| A | JP 2001-157393 A (MINEBEA CO., LTD.) 08 June 2001, fig. 5, 7 | 8 |
| A | CN 110474456 A (ZHUHAI GREE ENERGY SAVING REFRIGERATION TECHNOLOGY RESEARCH CENTER CO., LTD.) 19 November 2019, fig. 3, 4 | 9 |

Form PCT/ISA/210 (continuation of second sheet) (January 2015)

| Patent Documents referred to in the Report | Publication Date | Patent Family | Publication Date |
|---|---|---|---|
| WO 2020/129123 A1 | 25.06.2020 | (Family: none) | |
| CN 104836353 A | 12.08.2015 | (Family: none) | |
| JP 7-031120 A | 31.01.1995 | (Family: none) | |
| WO 2018/016067 A1 | 25.01.2018 | (Family: none) | |
| JP 2009-027842 A | 05.02.2009 | (Family: none) | |
| WO 2013/111301 A1 | 01.08.2013 | CN 104067483 A paragraph [0045], fig. 1 | |
| JP 59-092759 A | 29.05.1984 | (Family: none) | |
| JP 61-065868 U1 | 06.05.1986 | (Family: none) | |
| US 2019/0027984 A1 | 24.01.2019 | WO 2017/097511 A1 fig. 11 | |
| JP 2001-157393 A | 08.06.2001 | US 6768242 B1 fig. 6, 8 | |
| CN 110474456 A | 19.11.2019 | (Family: none) | |

Form PCT/ISA/210 (patent family annex) (January 2015)

**REFERENCES CITED IN THE DESCRIPTION**

**Patent documents cited in the description**

- JP 2005151757 A

- JP 2011087393 A